# EUROPEAN PATENT APPLICATION

(11) **EP 2 317 433 A1**
(43) Date of publication of application: **04.05.2011**
(21) Application number: 09174564.6
(22) Date of filing: 30.10.2009
(51) Int. Cl.: G06F 9/44

(54) **System and method to implement operations, administration, maintenance and provisioning tasks based on natural language interactions**

(71) Applicant: Research In Motion Limited, Waterloo, ON N2L 3W8 (CA)
(72) Inventor: George, Richard John, Waterloo Ontario N2L 3X2 (CA); Oliver, Brian Alexander, Waterloo Ontario N2L 5Z5 (CA); Mann, Mukhtiar Singh, Waterloo Ontario N2L 3X2 (CA)
(74) Representative: Patel, Binesh

(57) **Abstract**

Systems and methods for implementing operations, administration, maintenance and provisioning (OAM&P) tasks includes a user interface for receiving a natural language request from an administrator of the system. The natural language request is then parsed into one or more services available on the system. A series of system commands are then generated to implement the one or more services. Required information may be obtained from the administrator or from other system resources. Once the commands, including required variables, are completed, the commands can be executed.

## Description

### FIELD

The present application relates generally to operations, administration, maintenance and provisioning tasks and, more particularly, to systems and methods for implementing operations, administration, maintenance and provisioning tasks based on natural language interactions.

### BACKGROUND

Traditional operations, administration, maintenance and provisioning (OAM&P) user interfaces employ a mixture of command line instructions and menu driven operations. For example, to set the backdrop on a Windows machine, a user may be expected to locate the correct menu item from a context menu. Similarly, to add a user to a private branch telephone exchange (PBX), an administrator may be required to add information in a strict order, possibly with a requirement for accessing a number of different and particularized configuration screens in a particular order or subject to relatively inflexible rules. This requires the administrator to be highly trained in the use of the specific OAM&P user interface. The implementation of OAM&P tasks can be quite frustrating if for example the exact location of a particular menu item or the correct sequence of steps required to perform the task is not known. Moreover, when the OAM&P interface is changed in any way, for example when existing services are modified or new services added, the administrator must be re-educated in order to be able to easily use the modified user interface.

### SUMMARY

In one aspect, the present application provides a system for assembling machine-executable commands useful in implementing operations, administration, maintenance and provisioning (OAM&P) tasks using an automatic data processing system. The system comprises: a processor and one or more memories accessible by the processor, the processor for controlling input and output processes executed by a user interface module, a parser module, and a command generation module; the user interface module resident in the one or more memories accessible by the processor and comprising data structures representing commands executable by the processor for enabling acquisition of a natural language request representing one or more OAM&P tasks to be completed using at least one OAM&P application; the parser module resident in the same or other memory accessible by the processor and comprising data structures representing commands executable by the processor for parsing the natural language request received by the user interface module into the one or more OAM&P tasks; the command generation module resident in the same or other memory accessible by the processor and comprising data structures representing commands executable by the processor for generating one or more commands executable by the at least one OAM&P application to implement the one or more OAM&P tasks.

In another aspect, the present application provides a method of assembling machine-executable commands useful by an automatic data processing system in executing operations, administration, maintenance and provisioning (OAM&P) tasks, the system comprising a processor and one or more memories accessible by the processor; the method performed by the data processing system and comprising: controlling acquisition, using an interactive user interface, of a natural language request representing one or more OAM&P tasks to be completed using at least one OAM&P application; parsing the natural language request into the one or more OAM&P tasks; generating one or more commands executable by the at least one OAM&P application to implement the one or more OAM&P tasks.

Other aspects of the present application will be apparent to those of ordinary skill in the art from a review of the following detailed description in conjunction with the drawings.

### BRIEF DESCRIPTION OF THE DRAWINGS

Reference will now be made, by way of example, to the accompanying drawings which show example embodiments of the present application, and in which:

Figure 1 shows, in block diagram form, an example system for managing enterprise-related mobile calls, including an enterprise communications platform;

Figure 2 shows, in block diagram form, the contents of a memory / stored programming structure of the system of Figure 1;

Figure 3 shows a method of implementing a natural language request according to an embodiment;

Figure 4 shows a method of retrieving required information to satisfy a request according to an embodiment;

Figure 5 shows a graphical user interface for entering a natural language request according to an embodiment; and

Figure 6 shows a form for requesting information from an administrator in order to satisfy a natural language request according to an embodiment.

Similar reference numerals may have been used in different figures to denote similar components.

### DESCRIPTION OF EXAMPLE EMBODIMENTS

Embodiments of the present application are not limited to any particular operating system, mobile device architecture, server architecture, or computer programming language.

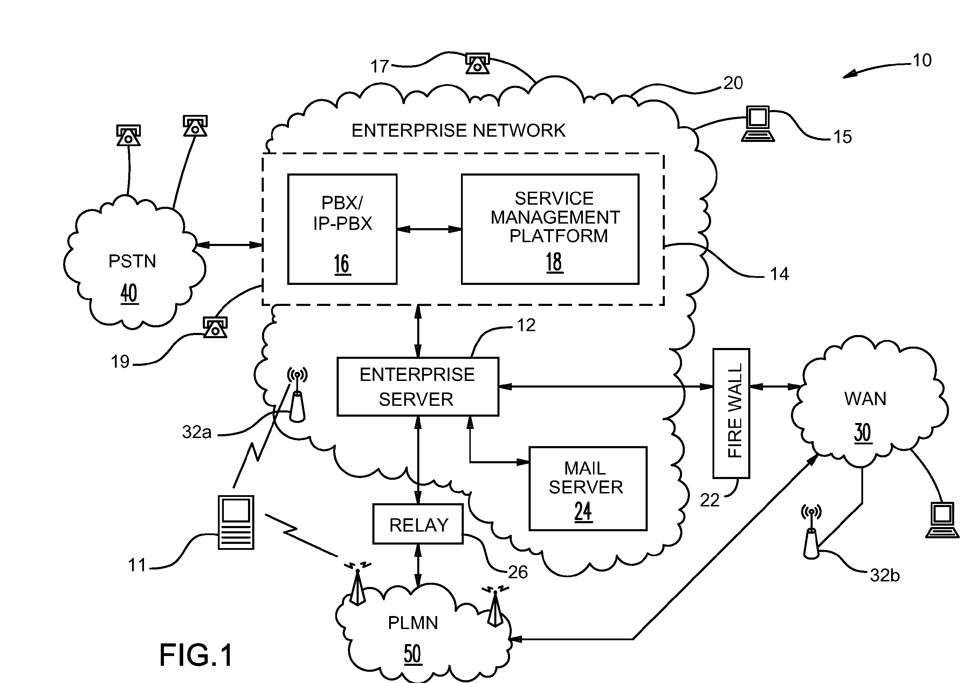

Reference is now made to Figure 1, which shows, in block diagram form, an example system, generally designated 10, for the control and management of communications and suitable for use in implementing the systems and methods disclosed herein. While system 10 of Figure 1 will be used to illustrate one suitable type of environment for implementing the invention, it will be understood by those skilled in the relevant arts that systems and methods according to the disclosure are suitable for implantation in conjunction within a wide variety of data processing environments, including those used in a wide variety of businesses.

In the embodiment shown, system 10 includes an enterprise or business system 20, which in many embodiments includes a local area network (LAN). In the description below, the enterprise or business system 20 may be referred to as an enterprise network 20. It will be appreciated that the enterprise network 20 may include more than one network and may be located in multiple geographic areas in some embodiments.

The enterprise network 20 may be connected, often through a firewall 22, to a wide area network (WAN) 30, such as the Internet. The enterprise network 20 may also be connected to a public switched telephone network (PSTN) 40 via direct inward dialing (DID) trunks or primary rate interface (PRI) trunks.

The enterprise network 20 may communicate with one or more public land mobile networks (PLMNs) 50, which may also be referred to as wireless wide area networks (WWANs) or, in some cases, as cellular networks. The connection with a PLMN 50 may be made via a relay 26, as known in the art.

The enterprise network 20 may also provide a wireless local area network (WLAN) 32a featuring wireless access points. Other WLANs 32 may exist outside the enterprise network 20. For example, WLAN 32b may be connected to WAN 30.

The system 10 may include a number of enterprise-associated mobile devices 11 (only one shown). The mobile devices 11 may include devices equipped for cellular communication through the PLMN 50, mobile devices equipped for Wi-Fi communications over one of the WLANs 32, or dual-mode devices capable of both cellular and WLAN communications. WLANs 32 may be configured in accordance with one of the IEEE 802.11 specifications.

It will be understood that the mobile devices 11 include one or more radio transceivers and associated processing hardware and software to enable wireless communications with the PLMN 50 and/or WLAN(s) 32. In various embodiments, the PLMN 50 and mobile devices 11 may be configured to operate in compliance with any one or more of a number of wireless protocols, including GSM, GPRS, CDMA, EDGE, UMTS, EvDO, HSPA, 3GPP, or a variety of others. It will be appreciated that the mobile device 11 may roam within the PLMN 50 and across PLMNs, in known manner, as the user moves. In some instances, the dual-mode mobile devices 11 and/or the enterprise network 20 are configured to facilitate roaming between the PLMN 50 and a WLAN 32, and are thus capable of seamlessly transferring sessions (such as voice calls) from a connection with the cellular interface of the dual-mode device 11 to the WLAN 32 interface of the dual-mode device 11, and vice versa.

The enterprise network 20 typically includes a number of networked servers, computers, and other devices. For example, the enterprise network 20 may connect one or more desktop or laptop computers 15 (one shown). The connection may be wired or wireless in some embodiments. The enterprise network 20 may also connect to one or more digital telephone sets 17 (one shown).

The enterprise network 20 may include one or more mail servers, such as mail server 24, for coordinating the transmission, storage, and receipt of electronic messages for client devices operating within the enterprise network 20. Examples of mail servers suitable for use in implementing systems and methods disclosed herein include the Microsoft Exchange Server^{™} and the IBM Lotus Domino^{™} server. Each user within the enterprise typically has at least one user account within the enterprise network 20. Associated with each user account is message address information, such as an e-mail address. Messages addressed to a user message address are stored on the enterprise network 20 in the mail server 24.

The relay 26 serves to route messages received over the PLMN 50 from the mobile device 11 to the corresponding enterprise network 20. The relay 26 also pushes messages from the enterprise network 20 to the mobile device 11 via the PLMN 50.

The enterprise network 20 also includes an enterprise server 12. Together with the relay 26, the enterprise server 12 functions to redirect or relay incoming e-mail messages addressed to a user's e-mail address within the enterprise network 20 to the user's mobile device 11 and to relay incoming e-mail messages composed and sent via the mobile device 11 out to the intended recipients within the WAN 30 or elsewhere.

As is typical in many enterprises, the enterprise network 20 includes a Private Branch exchange (although in various embodiments the PBX may be a standard PBX or an IP-PBX, for simplicity the description below uses the term PBX to refer to both) 16 having a connection with the PSTN 40 for routing incoming and outgoing voice calls for the enterprise. The PBX 16 is connected to the PSTN 40 via DID trunks or PRI trunks, for example. The PBX 16 may use ISDN signaling protocols for setting up and tearing down circuit-switched connections through the PSTN 40 and related signaling and communications. In some embodiments, the PBX 16 may be connected to one or more conventional analog telephones 19. The PBX 16 is also connected to the enterprise network 20 and, through it, to telephone terminal devices, such as digital telephone sets 17, softphones operating on computers 15, etc. Within the enterprise, each individual may have an associated extension number, sometimes referred to as a PNP (private numbering plan), or direct dial phone number. Calls outgoing from the PBX 16 to the PSTN 40 or incoming from the PSTN 40 to the PBX 16 are typically circuit-switched calls. Within the enterprise, e.g. between the PBX 16 and terminal devices, voice calls are often packet-switched calls, for example Voice-over-IP (VoIP) calls. The PBX 16 may have an associated administrative console (not shown) through which an administrator can interact with the PBX 16 to perform operations, administration, maintenance and provisioning tasks.

The enterprise network 20 may further include a Service Management Platform (SMP) 18 for performing some aspects of messaging or session control, like call control and advanced call processing features. The SMP 18 may, in some cases, also perform some media handling. Collectively the SMP 18 and PBX 16 may be referred to as the enterprise communications platform, generally designated 14. It will be appreciated that the enterprise communications platform 14 and, in particular, the SMP 18, is implemented on one or more servers having suitable communications interfaces for connecting to and communicating with the PBX 16 and/or DID/PRI trunks. Although the SMP 18 may be implemented on a stand-alone server, it will be appreciated that it may be implemented into an existing control agent/server as a logical software component.

The PBX 16 implements the switching to connect session legs and may provide the conversion between, for example, a circuit-switched call and a VoIP call, or to connect legs of other media sessions.

One of the functions of the enterprise communications platform 14 is to extend the features of enterprise telephony to the mobile devices 11. For example, the enterprise communications platform 14 may allow the mobile device 11 to perform functions akin to those normally available on a standard office telephone, such as the digital telephone set 17 or analog telephone set 15. Example features may include direct extension dialing, enterprise voice mail, conferencing, call transfer, call park, etc.

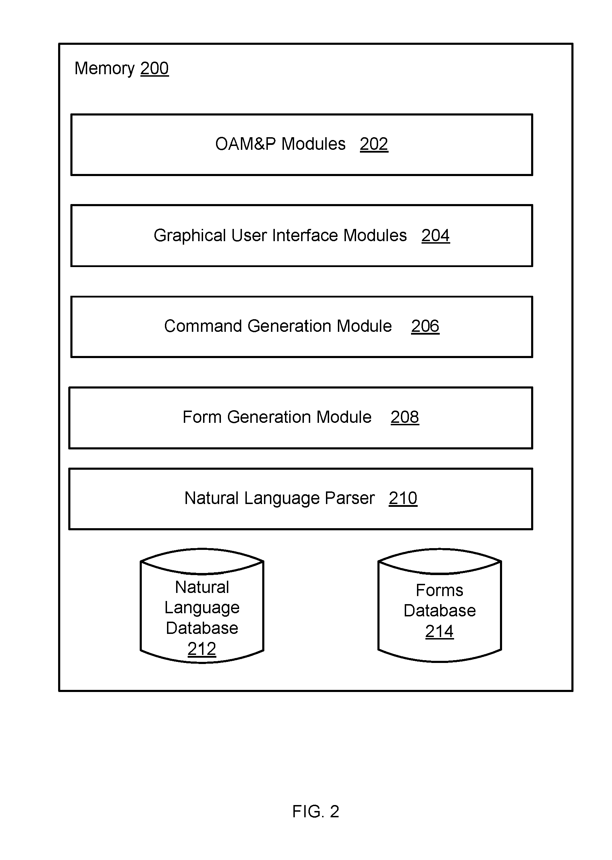

Reference is now made to Figure 2, which shows a block diagram schematically illustrating a memory and/or stored programming structure 200 suitable for use in implementing systems and methods of the type disclosed herein on an automatic processing system, for example in a server such as PBX 16. The memory programming structure 200 has various software components for controlling the operations of the PBX 16. In particular, the memory/ programming structure 200 contains, among others, OAM&P modules 202 comprising OAM&P applications for performing OAM&P tasks. These tasks are normally initiated by one or more administrators of the system. The memory 200 may also include graphical user interface (GUI) modules 204, command generation modules 206, form generation modules 208, a parser module 210, a natural language database 212 and a forms database 214.

The GUI modules 204 may generate and cause user interfaces to be displayed on systems accessed by, for example, administrator(s) or other users of the system 10. The user interfaces may, for example, be in the form of web pages, such as HTML- or XML-based pages, or other graphics- or text-based interactive input/output screens. The user interfaces may for example include various menus, icons and other input mechanisms for the submission of OAM&P requests and related information by an administrator. In some embodiments, the GUI modules 204 may display an interface including a graphical dialogue box with which to receive a natural language request from an administrator.

According to various embodiments, the parser module 210 can receive a natural language request and, possibly using the natural language database 212, parse the request into a set of one or more OAM&P tasks provided by one or more OAM&P applications in the system 10. Natural language generally refers to a language that is spoken or written by humans for general-purpose communication. Many methods of parsing of a natural language request suitable for use in implementing systems and methods as disclosed herein are well known to those of skill in the art, and doubtless others will hereafter be developed. Examples of tools which provide natural language processing include General Architecture for Text Engineering (GATE), MontyLingua and the Natural Language Toolkit (NLTK).

The command generation module 206 can receive a list of OAM&P tasks generated by the parser module 210, and generate one or more OAM&P commands to be executed by the OAM&P modules 202. The commands generated may be specific to the syntax(es) used by the system 10, and may be adapted to cause various components of system 10 to execute various actions; they may also cause data structures reflecting input data gathered using GUI modules 204 to be written to volatile and/or permanent storage, for further use and processing by the various components of system 10 and optionally other systems as well.

Form generation module 208 generates forms to be presented to an administrator by the GUI modules 204. Forms generated by module 208 may be adapted for presentation through and to incorporate data collected by means of GUI module 204. The forms may, for example, include HTML forms suitable for display on a web interface or web browser. Forms and/or data suitable for use by one or of modules 202, 204, 206, 208, 210 in building data sets useful for displaying, printing, or otherwise outputting forms generated by the form generation module 208 can, optionally, be stored in the forms database 214. Data may also be added to the form from existing knowledge stored in any static or dynamic memory accessible to the system 10. For example, information about users of the system 10 or equipment used in the system 10 may be used to generate some of the information presented on the form.

The forms generated by the form generation module 208 may be based around a single primary task or may be a composite form based around a primary task as well as one or more secondary tasks. For example, suppose a request was entered to "add user Joe Smith to the General class of service and modify the class of service to allow outgoing calls." In this example, the primary task may be adding a user and the secondary task may be modifying the class of service.

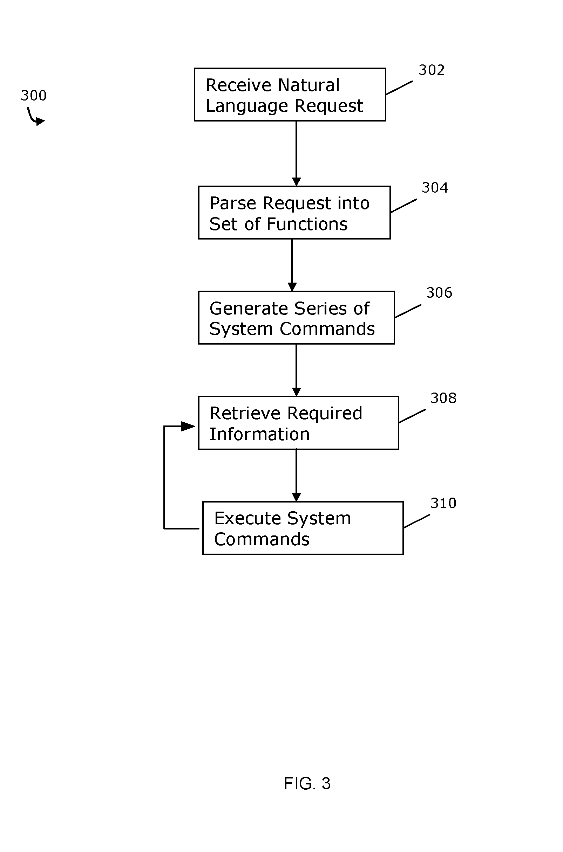

Reference is now made to Figure 3, which shows an embodiment of a method 300 for implementing a natural language request. Method 300 is suitable for implementation by, for example, the enterprise server architecture shown in Figures 1 and 2.

The method begins at block 302 where a natural language request is received from an administrator by the GUI modules 204. Data used to generate the request can be acquired by, for example, presenting on a display screen accessed by the administrator one or more interactive input/output screens, adapted to provide suitably-configured prompts for eliciting, via for example known input means, responsive input which can be recorded in the form of suitably-formatted data records and made available to any one or more of the other modules 202, 206, 208, 210, 212, and stored for example in one or more databases 212, 214.

After receipt of input from the GUIs at 302, the natural language request may be passed to the parser module 210 where it may be broken down into one or more data records identifying one or more tasks available in the system 10 to be sent to the command generation modules 206. The values of any variables required to execute the commands included in the request may also be extracted and passed to the command generation modules 206, as for example by inclusion in appropriate fields of suitably-formatted data records.

The list of tasks sent to the command generation modules 206 may be dependent on the information contained in the natural language request. For example, if the request was to "add a user", the list of tasks could include the "add user" task. If the request was to "Add Joe Smith", the list of tasks could include a "look up" task to look up information associated with a user named Joe Smith as well as the "add user" task.

At 306, a series of system commands for executing the set of tasks from block 304 is generated by the command generation modules 206. The commands may need to be ordered into a particular sequence in order for the request to be properly executed or the order of the commands may be irrelevant for some or all of the tasks.

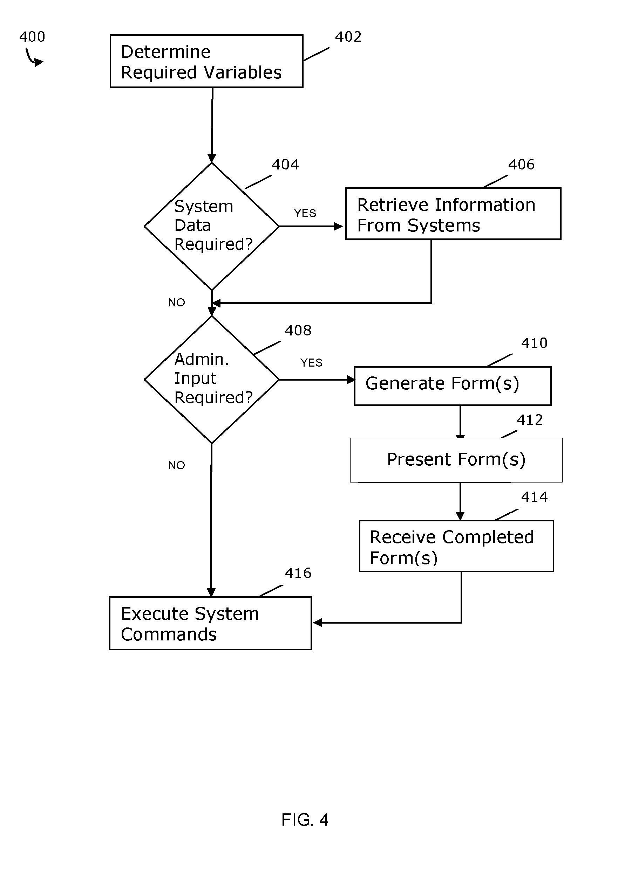

At 308, additional information required to execute one or more of the commands may be retrieved. The information may, for example, be available in the system, as for example in one or more previously-stored, related data records stored in databases 212, 214, or a related system, or it may need to be requested from the administrator. This step will be discussed in more detail in relation to Figure 4.

The retrieved information may be included in one or more of the generated commands and, at 310, one or more of the commands may be executed by the OAM&P modules 202.

In some situations, the method 300 may return to block 308 after one or more commands have been executed at 310 in order to retrieve required information for subsequent commands. For example, suppose the natural language request is "add Joe Smith." The system could first perform a look up of the user name Joe Smith at 310. If there were more than one Joe Smith in the system, the method 300 may return to 308 where information may be requested from the administrator in order to determine which Joe Smith is to be added. If the look up resulted in a single match, details such as email address, extension number, building locations, etc. could be retrieved at 308. The method 300 may then return to block 310 to execute the add user task using the retrieved information. The method 300 will terminate when all of the system commands generated at 306 have been executed.

Reference is now made to Figure 4, which shows one embodiment of a method 400 of retrieving information required for executing a series of commands based on a natural language request. The method 400 may be used at block 308 of the method 300 in Figure 3.

Each command generated in block 306 of method 300 may include or otherwise be associated with data representing one or more variables required or desirable for use in executing the command. For example, a command to add a user to a PBX will typically require the name of the user the user to be added, and possibly other information, such as an organization name and/or location, to be successfully executed. Similarly, a command to change the background of a user's screen will require the location of the image(s) to be displayed, colors and fonts to be used, etc. At block 402, the list of required or desired variables for some or all of the commands may be determined. As mentioned above, some of the variables required may have been included in the natural language request received at block 302 of the method 300. These variables will not be included in the list of required variables.

At 404, it is determined whether any variables associated with a command to be executed include system data which could be provided using data already available on system 10, as for example being stored in any associated databases. Such information may be stored, for example, on the system 10 itself or on a system to which the system 10 has access. For example, Joe Smith's employee ID may be required in order to add him to a requested PBX. This information may be available to the system 10 in, for example, a database including employee records. According to some embodiments, values for variables which may be retrieved from system data are retrieved at block 406.

At 408, it is determined whether there are any variables which require input from the administrator in order to be completed. If administrator input is required, the method 400 moves to block 410 where one or more forms suitable for eliciting the required information are generated. Any such forms may include GUI components such as textboxes, checkboxes, dropdown menus and the like, retrieved from database(s) 214, for accepting input from the administrator using, for example, known input means such as keyboards and pointing devices. At block 412, the forms are presented to the administrator by the GUI modules 204. The forms may, for example, be web-based or web-compatible forms which are presented to the user through a web browser or the like.

At this point, the generated forms may optionally be stored in the forms database 214 for later retrieval. A reference address or other identifiers useful for retrieving the forms may be associated with the dataset(s) representing the form, and may be presented to the administrator for this purpose. Alternatively, the reference address record could include sufficient information such that the forms could be regenerated, for example, by entering the reference address into a web browser, without the need to store them in the forms database 214. An administrator who knows they will be performing the same function more than once may generate the required forms and, for example, bookmark the web page(s) or otherwise store the reference address for later use. For example, suppose an administrator frequently adds users having different names and extensions but where all the extensions start with a '7'. The administrator could enter the following request into the natural language textbox 504: "Add a user to the general class of service as extension 7 and enable him for VoIP operations." In this case, a web form could be created with some pre-filled information. The administrator could use the form by adding in the name of the desired user and the corresponding extension ending. The reference address of this form could be bookmarked, or otherwise stored, by the administrator so that he/she could simply re-load the web form at a later time and add more users.

In some embodiments, an administrator may be able to use a stored list, such as a spread sheet, and the stored web form to initiate a number of actions with a single command. For example, the administrator could add a number of users whose names are stored in a spreadsheet named 'user_spreadsheet.xls' using the command: "Add from c:\user_spreadsheet.xls using the add users web form". The system 10 could then read the user names from the spreadsheet provided and populate one or more new web forms using the stored web form.

At 414, the completed forms are received from the administrator and the required information is extracted. At 416 the extracted data is used by the command generation modules 206 complete the generated commands for execution by the appropriate applications on system 10.

While the steps of methods 300 and 400 are shown as occurring in a particular order, it will be appreciated by those skilled in the art that many of the steps are interchangeable and may occur in different orders that that shown without materially affecting the end results of the methods 300 and 400.

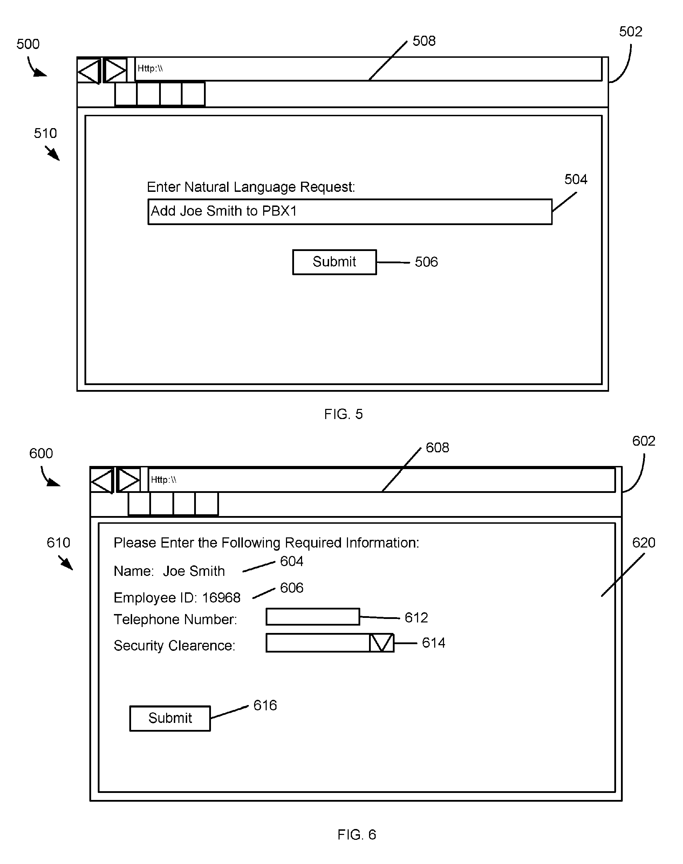

Reference will now be made to Figure 5, which shows one embodiment of a graphical user interface (GUI) 500 suitable for use by an administrator or other user of a system 10 entering a natural language request, and by the system 10 in acquiring data elicited by the various prompt(s) displayed. The GUI is presented in the form of a web-compatible page in a web browser 510. The web browser 510 presents an interactive task bar 502 including various buttons and menus the selection of which, using, for example, known 'point and click' command means, results in the issuance of a corresponding command to one or more processors executing corresponding applications on or otherwise controllable via the system 10, as well as a text box 508 in which input data, e.g., data representing a reference address resource, can be inputted. The GUI 500 includes a textbox 504 in which an administrator can enter, using a keyboard or other suitable input device(s), text strings representing terms to be included in a natural language request to be submitted to the natural language parsing module 210. When the use has completed entering the text to be used in generating the natural language request, the user can cause the system 10 to read the data representing such text and forward it to the parsing module 210 by selecting the submit button item 506.

Reference will now be made to Figure 6, which shows one embodiment of a graphical user interface (GUI) 600 including a form 620 for requesting information from an administrator in order to satisfy a natural language request. The web browser 610 again includes a task bar 602 including various buttons and menus as well as a textbox 608 in which a reference address can be inputted.

In this example, we will assume that the form 620 has been generated in response to the query seen in Figure 5: "Add Joe Smith to PBX1." In this case, the name of the user to be added, Joe Smith, which was included in the request, is displayed on the form. In this example, only one employee named Joe Smith was found and the employee ID 606 of Joe Smith has, in this embodiment, been retrieved from the system's employee records database and is displayed on the form 620. The form 620 also includes a text box 612, in which an administrator can enter a telephone number for the employee, and a dropdown box 614, which an administrator can use to designate a security clearance associated with the employee Joe Smith. Once all the information has been entered, the form 620 may be submitted using the submit button 616. The reference address in textbox 608 could be bookmarked by the administrator or otherwise saved for future reference.

Selection of "Submit" item 616 in Figure 6 can cause the application running the input process to read all data input at fields 612, 614, etc., and to cause other commands to execute. For example, selection of "Submit" command item 616 in Figure 6 can cause all data records associated with the action of adding user "Joe Smith" to the PBX subscriber list to be stored in one or more suitable databases, and records or flags useful in providing access to a user who has identified himself as Joe Smith to telephone and other applications controlled by system 10. Thus, for example, once an administrator has executed the Submit command within a suitably configured input GUI, and once any required further processing has been completed by system 10, a telephone number controlled by the corresponding PBX might be assigned to Mr. Smith, and a telephone convenient to his workspace might be activated using that number, both for incoming and outgoing calls, contingent upon entry of suitably-assigned passwords and other identifiers.

The following are further examples of commands which could be entered by an administrator in natural language textbox 504:
1) "Add a user"
2) "Add Joe Smith"
3) "Add Joe Smith to the general class of service as extension 2065 and enable him for VoIP operations"
Each of these examples relate to adding a new user but the amount of information provided in each request differs, and so the forms which are created to satisfy each request may differ.

In the first example, no additional information is provided apart from the immediate request to add a user. This would simply invoke an "add user" task and a web form could be constructed and presented to the administrator to obtain all the other information required by the system to complete the "add user" task.

In the second example, the name of a user, "Joe Smith", is provided. In this example, the system could first perform an enterprise look up of the name "Joe Smith". This look up may result in a single match, in which case the result of the look up can be combined into a web form to be presented to the administrator. This web form may be similar to the form 620 of FIG. 6. Alternatively, the look up operation might result in multiple matches. In the latter case, the web form presented to the administrator may also include an input means for the administrator to select which "Joe Smith" is to be added, such as, for example, a drop down list populated with information regarding each Joe Smith, along with the other information required to add a user.

Finally, in the third example, a more complex request is provided. In this case, the system 10 could first determine the general class of service and perform a look up of the user name provided. If the look up resulted in a single match, the system 10 could then confirm that the general class of service is valid for the particular user and possibly retrieve further configuration data. The system 10 could then check that VoIP is allowable for the extension provided, check the extension is valid, etc. Each service may restrict or add to the final web form that is presented to the administrator.

While the present disclosure is primarily described as a method, a person of ordinary skill in the art will understand that the present disclosure is also directed to an apparatus for carrying out the disclosed method and including apparatus parts for performing each described method block, be it by way of hardware components, a computer programmed by appropriate software to enable the practice of the disclosed method, by any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the disclosed method. It is understood that such apparatus, articles of manufacture, and computer data signals also come within the scope of the present disclosure.

The embodiments of the present disclosure described above are intended to be examples only. Those of skill in the art may effect alterations, modifications and variations to the particular embodiments without departing from the intended scope of the present disclosure. In particular, selected features from one or more of the above-described embodiments may be combined to create alternative embodiments not explicitly described, features suitable for such combinations being readily apparent to persons skilled in the art. The subject matter described herein in the recited claims intends to cover and embrace all suitable changes in technology.

## Claims

1. A system for assembling machine-executable commands useful in implementing operations, administration, maintenance and provisioning (OAM&P) tasks using an automatic data processing system, the system comprising:
a processor and one or more memories (200) accessible by the processor, the processor for controlling input and output processes executed by a user interface module (204), a parser module (210), and a command generation module (206);
the user interface module (204) resident in the one or more memories (200) accessible by the processor and comprising data structures representing commands executable by the processor for enabling acquisition of a natural language request representing one or more OAM&P tasks to be completed using at least one OAM&P application;
the parser module (210) resident in the same or other memory (200) accessible by the processor and comprising data structures representing commands executable by the processor for parsing the natural language request received by the user interface module into the one or more OAM&P tasks;
the command generation module (206) resident in the same or other memory (200) accessible by the processor and comprising data structures representing commands executable by the processor for generating one or more commands executable by the at least one application to implement the one or more OAM&P tasks.

2. The system of claim 1, wherein the command generation module (206) is configured to determine one or more variables required to execute the one or more commands and acquire a value for each of the one or more variables.

3. The system of claim 2, wherein at least one of the one or more variables are system data variables and the command generation module (206) is configured to retrieve values for the one or more system data variables from memory (200) accessible by the processor.

4. The system of claim 2 or claim 3, wherein at least one of the one or more variables are administrator variables requiring input by means of the user interface module (204).

5. The system of any one of claims 1 to 4, the system further comprising a forms generation module (208) configured to generate one or more input forms (620), and wherein the user interface module (204) is configured to present the one or more input forms (620) and receive one or more completed forms.

6. The system of claim 5, wherein the one or more OAM&P tasks comprise a primary task and one or more secondary tasks and the one or more input forms (620) comprise one or more composite forms based on the primary task and the one or more secondary tasks.

7. The system of claim 5 or claim 6, wherein the one or more input forms (620) are associated with a reference address and the user interface module is further configured to allow access to the one or more input forms (620) using the reference address.

8. The system of claim 7, wherein allowing access to the one or more input forms (620) comprises regenerating the one or more input forms (620) using information contained in the reference address.

9. The system of claim 7, the system further comprising a forms database (214) and wherein the forms generation module (208) is further configured to store the one or more input forms (620) in the forms database (214) and allowing access to the one or more input forms (620) comprises retrieving the one or more input forms (620) from the forms database (214).

10. The system of any one of claims 1 to 9, wherein the command generation module is configured to determine one or more variables required to execute the one or more commands and acquire a value for one or more of the one or more variables based on previously determined variables.

11. A method of assembling machine-executable commands useful by an automatic data processing system in executing operations, administration, maintenance and provisioning (OAM&P) tasks, the system comprising a processor and one or more memories (200) accessible by the processor; the method performed by the data processing system and comprising:
controlling acquisition, using an interactive user interface, of a natural language request representing one or more OAM&P tasks to be completed using at least one OAM&P application;
parsing the natural language request into the one or more OAM&P tasks;
generating one or more commands executable by the at least one OAM&P application to implement the one or more OAM&P tasks.

12. The method of claim 11, further comprising determining one or more variables required to execute the one or more commands and acquiring a value for each of the one or more variables.

13. The method of claim 12, wherein one or more of the one or more variables are system data variables and the method further comprises retrieving values for the one or more system data variables from a memory (200) accessible by the processor.

14. The method of claim 12 or claim 13, wherein at least one of the one or more variables are administrator variables requiring input from an administrator and the method further comprises retrieving values for the one or more administrator variables.

15. The method of claim 14, wherein retrieving values for the one or more administrator variables comprises generating one or more input forms (620), presenting the one or more input forms (620) and receiving one or more completed forms.

16. The method of claim 15, wherein the one or more OAM&P tasks comprise a primary task and one or more secondary tasks and the one or more input forms (620) comprise one or more composite forms based on the primary task and the one or more secondary tasks.

17. The method of claim 15 or claim 16, wherein the one or more input forms (620) have a reference address and the method further comprises allowing access to the one or more input forms (620) at using the reference address.

18. The method of claim 17, wherein allowing access to the one or more input forms (620) comprises regenerating the one or more input forms (620) using information contained in the reference address.

19. The method of claim 17, the method further comprising storing the one or more input forms (620) in a forms database (214) and wherein allowing access to the one or more input forms (620) comprises retrieving the one or more input forms (620) from the forms database (214).

20. The method of any one of claims 11 to 19, further comprising determining one or more variables required to execute the one or more commands and acquiring a value for one or more of the one or more variables based on previously determined variables.

## Amended claims

### Amended claims in accordance with Rule 137(2) EPC.

**1.** A system for assembling machine-executable commands useful in implementing operations, administration, maintenance and provisioning (OAM&P) tasks using an automatic data processing system, the system comprising:
a processor and one or more memories (200) accessible by the processor, the processor for controlling input and output processes executed by a user interface module (204), a parser module (210), a forms generation module (208) and a command generation module (206);
the user interface module (204) resident in the one or more memories (200) accessible by the processor and comprising data structures representing commands executable by the processor for enabling acquisition of a natural language request representing one or more OAM&P tasks to be completed using at least one OAM&P application;
the parser module (210) resident in the same or other memory (200) accessible by the processor and comprising data structures representing commands executable by the processor for parsing the natural language request received by the user interface module into the one or more OAM&P tasks;
the forms generation module (208) resident in the same or other memory (200) accessible by the processor and comprising data structures representing commands executable by the processor for generating one or more input forms (620) based on the natural language request, and wherein the user interface module (204) is configured to present the one or more input forms (620) and receive one or more completed forms; and
the command generation module (206) resident in the same or other memory (200) accessible by the processor and comprising data structures representing commands executable by the processor for generating, based on the one or more completed forms, one or more commands executable by the at least one application to implement the one or more OAM&P tasks.

**2.** The system of claim 1, wherein the command generation module (206) is configured to determine one or more variables required to execute the one or more commands and acquire a value for each of the one or more variables.

**3.** The system of claim 2, wherein at least one of the one or more variables are system data variables and the command generation module (206) is configured to retrieve values for the one or more system data variables from memory (200) accessible by the processor.

**4.** The system of claim 2 or claim 3, wherein at least one of the one or more variables are administrator variables requiring input by means of the user interface module (204) via the one or more input forms (620).

**5.** The system of any one of claims 1 to 4, wherein the one or more OAM&P tasks comprise a primary task and one or more secondary tasks and the one or more input forms (620) comprise one or more composite forms based on the primary task and the one or more secondary tasks.

**6.** The system of any one of claims 1 to 5, wherein the one or more input forms (620) are associated with a reference address and the user interface module is further configured to allow access to the one or more input forms (620) using the reference address.

**7.** The system of claim 6, wherein allowing access to the one or more input forms (620) comprises regenerating the one or more input forms (620) using information contained in the reference address.

**8.** The system of claim 6, the system further comprising a forms database (214) and wherein the forms generation module (208) is further configured to store the one or more input forms (620) in the forms database (214) and allowing access to the one or more input forms (620) comprises retrieving the one or more input forms (620) from the forms database (214).

**9.** The system of any one of claims 1 to 8, wherein the command generation module is configured to determine one or more variables required to execute the one or more commands and acquire a value for one or more of the one or more variables based on previously determined variables.

**10.** A method of assembling machine-executable commands useful by an automatic data processing system in executing operations, administration, maintenance and provisioning (OAM&P) tasks, the system comprising a processor and one or more memories (200) accessible by the processor; the method performed by the data processing system and comprising:
controlling acquisition, using an interactive user interface, of a natural language request representing one or more OAM&P tasks to be completed using at least one OAM&P application;
parsing the natural language request into the one or more OAM&P tasks;
generating one or more input forms (620) based on the natural language request, presenting the one or more input forms (620), and receiving one or more completed forms;
generating, based on the one or more completed forms, one or more commands executable by the at least one OAM&P application to implement the one or more OAM&P tasks.

**11.** The method of claim 10, further comprising determining one or more variables required to execute the one or more commands and acquiring a value for each of the one or more variables.

**12.** The method of claim 11, wherein one or more of the one or more variables are system data variables and the method further comprises retrieving values for the one or more system data variables from a memory (200) accessible by the processor.

**13.** The method of claim 11 or claim 12, wherein at least one of the one or more variables are administrator variables requiring input from an administrator via the one or more input forms and the method further comprises retrieving values for the one or more administrator variables.

**14.** The method of any one of claims 10 to 13, wherein the one or more OAM&P tasks comprise a primary task and one or more secondary tasks and the one or more input forms (620) comprise one or more composite forms based on the primary task and the one or more secondary tasks.

**15.** The method of any one of claims 10 to 14, wherein the one or more input forms (620) have a reference address and the method further comprises allowing access to the one or more input forms (620) at using the reference address.

**16.** The method of claim 15, wherein allowing access to the one or more input forms (620) comprises regenerating the one or more input forms (620) using information contained in the reference address.

**17.** The method of claim 15, the method further comprising storing the one or more input forms (620) in a forms database (214) and wherein allowing access to the one or more input forms (620) comprises retrieving the one or more input forms (620) from the forms database (214).

**18.** The method of any one of claims 10 to 17, further comprising determining one or more variables required to execute the one or more commands and acquiring a value for one or more of the one or more variables based on previously determined variables.
